# EUROPEAN PATENT APPLICATION

(11) **EP 3 323 536 A1**
(43) Date of publication of application: **23.05.2018**
(21) Application number: 16824045.5
(22) Date of filing: 04.07.2016
(51) Int. Cl.: B22F 7/04, B22F 3/11, C22C 9/06, C22C 19/03, F16C 33/10, F16C 33/12, F16C 33/20

(54) **MULTI-LAYERED SLIDING MEMBER**

(30) Priority: 16.07.2015 JP 2015142524
(71) Applicant: Oiles Corporation, Tokyo 108-0075 (JP)
(72) Inventor: SHIRASAKA, Yasuhiro, Fujisawa-shi Kanagawa 252-0811 (JP); ONO, Masato, Fujisawa-shi Kanagawa 252-0811 (JP)
(74) Representative: J A Kemp
(86) International application number: PCT/JP2016/003186
(87) International publication number: WO 2017/010059

(57) **Abstract**

A multilayered sliding member 1 comprises a backing plate 2 having a steel plate; and a porous sintered alloy layer 3 which is integrally joined to one surface of the backing plate 2 and is composed of 25 to 60% by mass of nickel, 2 to 7% by mass of phosphorus, and the balance copper.

## Description

### TECHNICAL FIELD

The present invention relates to a multilayered sliding member including a backing plate having a steel plate and a porous sintered alloy layer formed integrally on one surface of the backing plate or further including a coating layer filled in the pores of, and secured on one surface of, the porous sintered alloy layer, and more particularly to a multilayered sliding member which is suitably used in a sliding portion of such as an internal combustion engine or a transmission under the presence of a lubricating oil containing an extreme pressure additive including chlorine, sulfur, or the like.

### BACKGROUND ART

Multilayered sliding members have been proposed which are each comprised of a backing plate formed of a steel plate and a porous sintered alloy layer formed integrally on one surface of the backing plate and composed of a bronze-based copper alloy such as bronze, lead bronze, or phosphor bronze (refer to Patent Documents 1 to 3). In order to improve the wear resistance, seizure resistance, and conformability of this porous sintered alloy layer, proposals have been made to add, for example, phosphorus, aluminum, bismuth, and the like to the porous sintered alloy layer (refer to Patent Documents 4 and 5).

### PRIOR ART DOCUMENTS

### PATENT DOCUMENTS

Patent Document 1: JP-A-50-43006
Patent Document 2: JP-A-53-117149
Patent Document 3: JP-A-11-173331
Patent Document 4: JP-A-10-330868
Patent Document 5: JP-A-2005-163074

### SUMMARY OF THE INVENTION

### PROBLEMS TO BE SOLVED BY THE INVENTION

Incidentally, the multilayered sliding members are used under numerous different conditions, e.g., under conditions such as a dry friction condition or an in-oil or oil lubricating condition. However, in the in-oil or oil lubricating condition, particularly in use under an extreme pressure condition where the bearing pressure at the frictional surface is high and seizure ascribable to the fracture of the oil film is likely to occur and in the in-oil or oil lubricating condition in which the oil contains an extreme pressure additive including such as chlorine, sulfur (S) and phosphorus (P), particularly sulfur, sulfidation corrosion can occur in the porous sintered alloy layer constituted of a bronze-based copper alloy in consequence of the generation of sulfides (Cu₂S, CuS, etc.) due to reaction between, on the one hand, the copper (Cu) of the porous sintered alloy layer exposed at the sliding surface or a cut surface caused by cutting the multilayered sliding member and, on the other hand, the sulfur in the lubricating oil contained as the extreme pressure additive. The sulfides thus generated cause the strength of the porous sintered alloy layer to decline and promote the wear of the coating layer.

The present invention has been devised in view of the above-described aspects, and its object is to provide a multilayered sliding member with a porous sintered alloy layer which is capable of suppressing the progress of sulfidation corrosion even under the condition of use of a lubricating oil containing an extreme pressure additive including sulfur and the like, and which excels in friction and wear characteristics and load resistance.

### MEANS FOR OVERCOMING THE PROBLEMS

A multilayered sliding member in accordance with the present invention comprises: a backing plate having a steel plate; and a porous sintered alloy layer which is integrally joined to one surface of the backing plate and is composed of 25 to 60% by mass of nickel, 2 to 7% by mass of phosphorus, and the balance copper.

The present invention has been made by focusing on nickel (Ni) which, in the same way as zinc, has an effect of suppressing the generation of sulfides under a sulfidation corrosion atmosphere. In a multilayered sliding member having a porous sintered alloy layer containing predetermined amounts of nickel and phosphorus with respect to copper (Cu) constituting a principal component, even under the in-oil or oil lubricating condition using a lubricating oil containing an extreme pressure additive including such as sulfur, the progress of sulfidation corrosion of the porous sintered alloy layer is suppressed as practically as possible, and a fall-off of the porous sintered alloy layer from the backing plate due to the generation of sulfides attributable to sulfidation corrosion does not occur.

To additionally provide the porous sintered alloy layer with low friction property, the multilayered sliding member in accordance with the present invention may further comprise a coating layer filled in the pores of, and secured on one surface of, the porous sintered alloy layer and containing at least a synthetic resin. In the multilayered sliding member in accordance with the present invention provided with such a coating layer, the exfoliation of the coating layer from the porous sintered alloy layer does not occur.

In a preferred example, the synthetic resin includes at least one principal component selected from a fluororesin (a polytetrafluoroethylene resin or the like), a polyacetal resin, a polyamide resin, a polyphenylene sulfide resin, a polyetheretherketone resin, and a polyamideimide resin, and at least one additional component constituted of an organic material selected from a polyimide resin, a fired phenolic resin, a polyphenylene sulfide resin, and an oxybenzoyl polyester resin. Furthermore, the coating layer may contain at least one inorganic material selected from a phosphate, a barium sulfate, and a solid lubricant in addition thereto.

As more specific examples of the coating layer, it is possible to cite by way of illustration a synthetic resin composed of 5 to 40% by mass of a barium sulfate, 1 to 30% by mass of a phosphate, 1 to 10% by mass of an organic material of one or more kinds selected from a polyimide resin, a fired phenolic resin, and a polyphenylene sulfide resin, and the balance a polytetrafluoroethylene resin; a synthetic resin composed of 1 to 25% by volume of an oxybenzoyl polyester resin, 1 to 15% by volume of a phosphate, 1 to 20% by volume of a barium sulfate, and the balance a polytetrafluoroethylene resin; and a synthetic resin composed of 0.5 to 5% by weight of a polyhydric alcohol fatty acid ester derived from a saturated fatty acid and a polyhydric alcohol, 0.5 to 3% by weight of a jojoba oil, and the balance a polyacetal resin.

In the multilayered sliding member in accordance with the present invention, the a porous sintered alloy layer may be integrally joined to one surface of the backing plate and composed of 25 to 60% by mass of nickel, 2 to 7% by mass of phosphorus, 3 to 8% by mass of tin, and the balance copper. Such tin exhibits the action of suppressing the progress of sulfidation corrosion of the porous sintered alloy layer.

In the multilayered sliding member in accordance with the present invention, the steel plate may be formed of a ferritic, austenitic, or martensitic stainless(SUS) steel plate according to the usage of the multilayered sliding member, and the one surface of the backing plate may be one surface of this stainless steel plate. Further, the backing plate may be comprised of this steel plate and a nickel coating covering one surface of that stainless steel plate, and the one surface of the backing plate may be one surface of the nickel coating. Furthermore, the backing plate may be a so-called nickel-top steel plate comprised of a rolled steel plate for general structure (SS 400 or the like) defined in JIS G 3101 as a steel plate or a cold rolled steel plate (SPCC) defined in JIS G 3141 and a nickel coating covering one surface of the rolled steel plate for general structure or the cold rolled steel plate by electrolytic nickel plating or the like, and the one surface of the backing plate may be one surface of the nickel coating. In the case of such a stainless steel plate of the backing plate, since both surfaces thereof are normally covered by a passive state film, and the corrosion resistance of both surfaces thereof is maintained stably, normally, nickel coating is unnecessary for both surfaces thereof, however, as the passive state film is ultrathin and fragile, a nickel coating by nickel plating may be formed on the one surface of the stainless steel plate for the purpose of reinforcing that passive state film as above. The thickness of these nickel coatings is preferably approximately 3 to 50 µm.

As the stainless steel plate, cold rolled stainless steel plates are suitable. Among these, as JIS steel types of the ferritic stainless steel plate, it is possible to cite, for example, SUS 405, SUS 410L, SUS 429, SUS 430, SUS 434, SUS 436L, SUS 444, SUS 447J1, and the like. As JIS steel types of the austenitic stainless steel plate, it is possible to cite, for example, SUS 301, SUS 302, SUS 303, SUS 304, SUS 305, SUS 309S, SUS 310S, SUS 316, SUS 317, SUS 321, SUS 347, SUS 384, and the like. Still further, as JIS steel types of the martensitic stainless steel plate, it is possible to cite, for example, SUS 403, SUS 410, SUS 416, SUS 420J1, SUS 431, SUS 440A, and the like.

Since nickel forms a continuous solid solution with copper which constitutes a principal component of the porous sintered alloy layer, sintering through the so-called mutual diffusion phenomenon progresses in which nickel is diffused in copper, or copper is diffused in nickel, so that a matrix containing a dense copper-nickel alloy (CuNi) is formed in the porous sintered alloy layer. The matrix containing this copper-nickel alloy contributes to improvement of the wear resistance, load resistance, corrosion resistance, and strength of the porous sintered alloy layer, and exhibits an effect of suppressing the progress of sulfidation corrosion. Also, nickel is diffused to the one surface of the backing plate during sintering and alloys its interface, improves the bonding strength of the porous sintered alloy layer with respect to the one surface of the backing plate, and forms a liquid phase of a nickel-phosphorus alloy (NiP) by partly alloying with phosphorus, so that a nickel-phosphorus alloy having high affinity with the backing plate is interposed at the interface of the porous sintered alloy layer with the one surface of the backing plate, and exhibits the action of firmly bonding and integrating the porous sintered alloy layer with the one surface of the backing plate in conjunction with the alloying due to the diffusion of nickel at the interface. Still further, nickel has an effect of increasing porosity by forming pores in the porous sintered alloy layer at the time of being diffused with copper during sintering.

If nickel is contained by less than 25% by mass, a sufficient effect is not exerted in the improvement of the wear resistance, load resistance, corrosion resistance, and strength of the porous sintered alloy layer, and the effect of suppressing the progress of sulfidation corrosion is not sufficiently exhibited, so that there is a possibility that a reduction of the weight of the porous sintered alloy layer ascribable to sulfidation corrosion may be revealed. On the other hand, if nickel is contained in excess of 60% by mass, the corrosion resistance of the porous sintered alloy layer improves, but there is a possibility of causing a decline in the strength of the porous sintered alloy layer. Accordingly, nickel in the porous sintered alloy layer may be contained by 25 to 60% by mass, particularly 25 to 50% by mass.

In a preferred example of the present invention, the porous sintered alloy layer includes a matrix containing a copper-nickel alloy and a nickel-phosphorus alloy phase crystallized at grain boundaries of the matrix, and wherein the matrix has a micro Vickers hardness (HMV) (hereafter referred to as hardness) of at least 170, and the nickel-phosphorus alloy phase has a hardness of at least 600.

Phosphorus is alloyed with parts of copper, which constitutes a principal components, and nickel, and enhances the strength of the matrix as a copper-nickel-phosphorus alloy, generates a liquid phase of the nickel-phosphorus alloy at a temperature in the vicinity of 875°C, and causes a nickel-phosphorus alloy phase higher in hardness than the hardness of that matrix to crystallize at grain boundaries including the copper-nickel alloy phase, thereby demonstrating an effect of further improving the wear resistance of the porous sintered alloy layer. In addition, since phosphorus has strong reducing power, phosphorus cleans the one surface of the backing plate by virtue of its reducing action and exhibits an effect of promoting the alloying of nickel through its diffusion to the one surface of the backing plate.

In the porous sintered alloy layer, if phosphorus is contained by less than 2% by mass, the above-described effects are not sufficiently exhibited, whereas if phosphorus is contained in excess of 7% by mass, the rate of crystallization of the nickel-phosphorus alloy phase onto the grain boundaries of the matrix becomes large, and hence there is a possibility of causing damage to the surface of the mating member. Accordingly, it suffices if phosphorus is contained in the porous sintered alloy layer by 2 to 7% by mass, particularly 3 to 5% by mass.

The porous sintered alloy layer may further contain tin in addition to nickel and phosphorus with respect to the copper constituting the principal component. Tin forms a copper-tin alloy (CuSn) by alloying with the copper constituting the principal component, promotes sintering, and contributes to the improvement of the strength, toughness, and wear resistance of the ground of the porous sintered alloy layer, and exhibits suppressing action with respect to the progress of sulfidation corrosion. In the same way as nickel, in the porous sintered alloy layer, if tin is contained by less than 3% by mass, the above-described effects are not sufficiently exhibited, whereas if tin is contained in excess of 8% by mass, the pores of the porous sintered alloy layer are lost, and the holding force of the coating layer filled in the pores of the porous sintered alloy layer, i.e., the so-called anchor effect, is caused to decline. Moreover, hard intermetallic compounds of copper-nickel-tin are generated, possibly causing the strength and toughness of the ground of the porous sintered alloy layer to decline. Accordingly, tin may be contained in the porous sintered alloy layer by 3 to 8% by mass, particularly 5 to 7% by mass.

In manufacturing the multilayered sliding member in accordance with the present invention, the copper constituting the principal component of the porous sintered alloy layer may be used in the form of a simple copper powder or in the form of a copper-nickel alloy powder or a copper-phosphorus alloy (CuP) powder. Nickel may normally be used in the form of a copper-nickel alloy powder, e.g., an atomized copper-nickel alloy powder of copper-20 to 40 mass% nickel, with respect to the copper constituting the principal component, or in the form of a simple nickel powder. Further, phosphorus may be used in the form of a nickel-phosphorus alloy powder, e.g., an atomized nickel-phosphorus alloy powder of nickel-4 mass% phosphorus, or in the form of a copper-phosphorus alloy powder, e.g., an atomized copper-phosphorus alloy powder of copper-15 mass% phosphorus. Still further, tin may be used in the form of a simple tin powder or in the form of a copper-tin alloy powder, e.g., an atomized copper-tin alloy powder of copper-10 mass% tin. Furthermore, copper, nickel, and phosphorus, or copper, nickel, phosphorus, and tin may be used in the form of an atomized copper-nickel-phosphorus alloy (CuNiP) powder or an atomized copper-tin-nickel-phosphorus alloy (CuSnNiP) powder which is obtained by combining the respective simple powders and alloy powders, as required, so as to allow copper, nickel, and phosphorus, or copper, nickel, phosphorus, and tin, to be set to desired contents in advance, and by melting these substances to fabricate a molten metal, and then by powdering the molten metal by a gas atomizing method. If the respective components are used in the form of the atomized copper-nickel-phosphorus alloy powder or the atomized copper-tin-nickel-phosphorus alloy powder, there is an advantage in that it is possible to avoid the so-called segregation in which a misdistribution or nonuniform distribution occurs in the powders at the time of using copper, tin, and nickel in the form of simple powders.

In the present invention, the porous sintered alloy layer preferably has a thickness of approximately 0.1 to 0.5 mm, particularly 0.3 to 0.4 mm, and the coating layer has a thickness of 0.02 to 0.1 mm.

The multilayered sliding member in accordance with the present invention can be used as a flat sliding plate or, in the case where the coating layer is provided in addition to the porous sintered alloy layer, as a cylindrical wrapped bush formed by cylindrically bending the multilayered sliding member with the coating layer facing inside.

### ADVANTAGES OF THE INVENTION

According to the present invention, it is possible to provide a multilayered sliding member which, under an in-lubricating oil condition, particularly even under an in-oil or oil lubricating condition using a lubricating oil containing an extreme pressure additive including such as sulfur, is capable of reducing the generation of sulfidation corrosion occurring in the porous sintered alloy layer to a low level and of suppressing the progress of sulfidation corrosion, and in which a fall-off of the porous sintered alloy layer due to the generation of sulfides attributable to sulfidation corrosion does not occur, and the exfoliation of the coating layer filled and secured on the porous sintered alloy layer does not occur.

### BRIEF DESCRIPTION OF THE DRAWINGS

Fig. 1 is an explanatory vertical cross-sectional view of a preferred embodiment of a multilayered sliding member in accordance with the present invention;
Fig. 2 is an explanatory vertical cross-sectional view of another preferred embodiment of the multilayered sliding member in accordance with the present invention;
Fig. 3 is an explanatory diagram of a micrograph of a porous sintered alloy layer of the multilayered sliding member in accordance with Example 1;
Fig. 4 is an explanatory diagram of a micrograph of the porous sintered alloy layer of the multilayered sliding member in accordance with Example 3;
Fig. 5 is an explanatory diagram of a micrograph of the porous sintered alloy layer of the multilayered sliding member in accordance with Example 5; and
Fig. 6 is an explanatory perspective view for explaining a thrust test.

### MODE FOR CARRYING OUT THE INVENTION

Next, a more detailed description will be given of the present invention and a mode for carrying it out on the basis of the preferred examples shown in the drawings. It should be noted that the present invention is not limited to these examples.

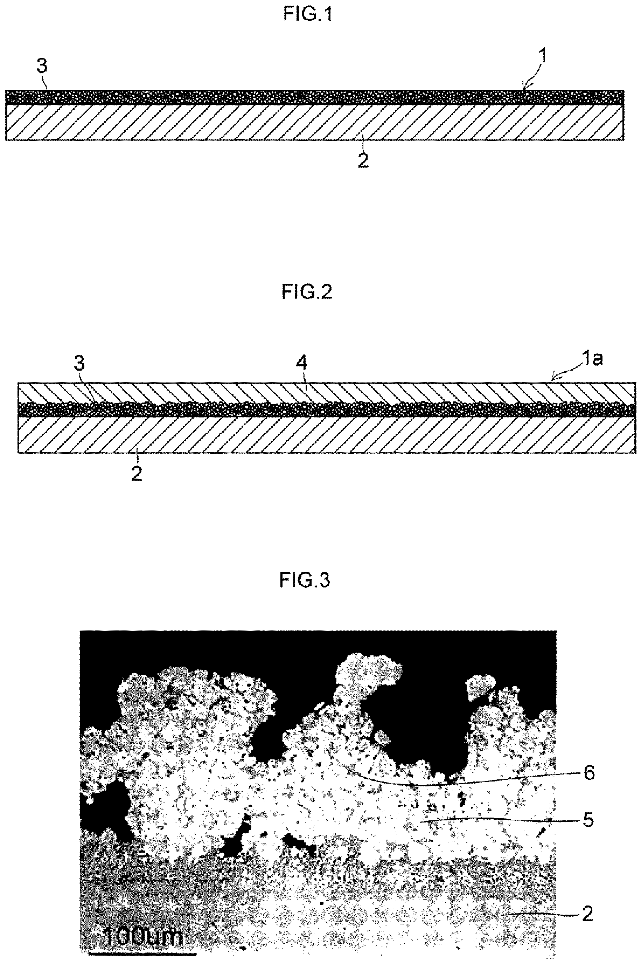

First, a description will be given of an example of the method of manufacturing a multilayered sliding member 1 in accordance with the present invention as shown in Fig. 1.

As a backing plate 2, a stainless steel plate is prepared which is constituted of a continuous strip with a thickness of 0.3 to 1.0 mm and is provided as a hoop material by being wound into a coil shape. The stainless steel plate to be prepared may not necessarily be a continuous strip, but may be a strip cut into an appropriate length.

The following are prepared: an electrolytic copper powder passing through a 150-mesh (97 µm) sieve, an electrolytic nickel powder passing through a 250-mesh (60 µm) sieve, an atomized copper-nickel alloy powder of copper and 25 to 40 mass% of nickel passing through a 200-mesh (74 µm) sieve, an atomized nickel-phosphorus alloy powder of nickel and 4 to 11 mass% of phosphorus passing through a 350-mesh (44 µm) sieve, an atomized copper-phosphorus alloy powder of copper and 15 mass% of phosphorus passing through a 350-mesh (44 µm) sieve, and an atomized tin powder passing through a 350-mesh (44 µm) sieve. These powders are used in combination, as required, and adjustment is made such that the compounding ratio becomes 25 to 60 mass% of nickel, 2 to 7 mass% of phosphorus, and the balance copper, or 25 to 60 mass% of nickel, 2 to 7 mass% of phosphorus, 3 to 8 mass% of tin, and the balance copper. Subsequently, these powders are charged into a V-type mixer and are mixed for 20 to 60 minutes to thereby prepare a mixed powder.

This mixed powder is sprayed onto one surface of the backing plate 2 into a uniform thickness and the backing plate 2 thus treated is sintered for 5 to 10 minutes at a temperature of 870 to 950°C in a heating furnace set in a vacuum or adjusted to a reducing atmosphere of such as a hydrogen gas, a hydrogen-nitrogen mixed gas (25 vol.% H₂ and 75 vol.% N₂), or an ammonia cracked gas (AX gas: a mixed gas of 75 vol.% H₂ and 25 vol.% N₂). Through this sintering, it is possible to obtain the multilayered sliding member 1 in which a porous sintered alloy layer 3 containing 25 to 60 mass% of nickel, 2 to 7 mass% of phosphorus, and the balance copper, or 25 to 60 mass% of nickel, 2 to 7 mass% of phosphorus, 3 to 8 mass% of tin, and the balance copper, is integrally diffusion-bonded to one surface of the backing plate 2.

It was observed by a microscope that the porous sintered alloy layer 3 was comprised of a matrix containing a soft copper-nickel alloy exhibiting a hardness (HMV) of 170 or more and a hard nickel-phosphorus alloy phase dispersedly crystallized at grain boundaries of this matrix and exhibiting a hardness (HMV) of 600 or more

A description will be given of an example of the method of manufacturing a multilayered sliding member 1a which further has a coating layer 4, as shown in Fig. 2, on such a porous sintered alloy layer 3.

A petroleum-based solvent in an amount of 15 to 30 parts by weight is compounded with 100 parts by weight of a mixture containing a polytetrafluoroethylene resin, a barium sulfate, a phosphate, and a resin consisting of one or two or more kinds of organic materials, which mixture is obtained by agitating and mixing by a Henschel mixer 5 to 40 mass% of a barium sulfate, 1 to 30 mass% of a phosphate, 1 to 10 mass% of a resin consisting of one or more kinds of organic materials selected from a polyimide resin, a sintered phenolic resin, and a polyphenylene sulfide resin, and the balance a polytetrafluoroethylene resin. The compounded admixture is mixed at a temperature (15°C) not more than the room-temperature transition point of the polytetrafluoroethylene resin to thereby fabricate a synthetic resin. This fabricated synthetic resin is supplied to and spread over one surface of the porous sintered alloy layer 3 and is rolled by a roller to obtain a predetermined thickness of the synthetic resin and allow the synthetic resin to be filled and secured into the pores of, and onto the one surface of, the porous sintered alloy layer 3. Subsequently, the semi-processed product thus treated is held for several minutes in a hot air drying furnace heated to a temperature of 200 to 250°C to remove the solvent, and is then subjected to pressure roller treatment under a pressure of 300 to 600 kgf/cm² to form the dried synthetic resin into a predetermined thickness. This semi-processed product is introduced into the heating furnace and is sintered by being heated at a temperature of 360 to 380°C for a period between several minutes and 10 and several minutes, and is then removed out of the furnace and is subjected to roller treatment again to adjust the variation of the size. The multilayered sliding member 1a is thereby obtained which is provided with the coating layer 4 filled in the pores of, and secured on one surface of, the porous sintered alloy layer 3 which is integrally diffusion-bonded to one surface of the backing plate 2.

Hereafter, a description will be given of Examples 1 to 8 and Comparative Examples 1 and 2.

### Example 1

A 0.65 mm-thick ferritic stainless steel plate (SUS 430) cut into a 170 mm width and a 600 mm length was used as the backing plate 2.

In order to reduce satellites from an alloy powder (25 mass% nickel, 3 mass% phosphorus, and 72 mass% copper), which was obtained by powdering by a gas atomizing method a molten alloy obtained by melting 55% by mass of a copper powder, 25% by mass of a nickel powder, and 20% by mass of a copper-15mass% phosphorus alloy powder, the alloy powder was subjected to frictional grinding by using a roller mill and was classified to thereby obtain an alloy powder passing through a 200-mesh sieve.

This alloy powder was sprayed into a uniform thickness onto one surface of the backing plate 2 degreased and cleaned in advance with trichlene, and the backing plate 2 thus treated was sintered for 10 minutes at a temperature of 910°C in the heating furnace adjusted to a reducing atmosphere of a hydrogen-nitrogen mixed gas (25 vol.% H₂ - 75 vol.% N₂), thereby obtaining a multilayered sliding member 1 having the backing plate 2 and the porous sintered alloy layer 3 which was integrally diffusion-bonded to one surface of the backing plate 2, had a thickness of a 0.3 mm, and was composed of 25% by mass of nickel, 3% by mass of phosphorus, and the balance copper. As is clear from Fig. 3, the porous sintered alloy layer 3 in the fabricated multilayered sliding member 1 showed a structure in which sintering due to the mutual diffusion of nickel and copper had progressed, and a nickel-phosphorus alloy phase 6 was dispersedly crystallized at grain boundaries of a matrix 5 containing a dense copper-nickel alloy. The hardness of the matrix 5 showed 174, and the hardness of the nickel-phosphorus alloy phase 6 showed 629.

### Example 2

A backing plate similar to that of Example 1 was used.

In the same way as in Example 1, a copper alloy powder (30 mass% nickel, 3 mass% phosphorus, and 67 mass% copper) was prepared from 75% by mass of a copper-40 mass% nickel alloy powder, 20% by mass of a copper-15 mass% phosphorus alloy powder, and 5% by mass of a copper powder.

In the same way as in Example 1, excepting that this copper alloy powder was sintered at a temperature of 900°C, a multilayered sliding member 1 having the backing plate 2 and the porous sintered alloy layer 3 was fabricated. The porous sintered alloy layer 3 in the fabricated multilayered sliding member 1 exhibited a structure similar to that of Example 1. The hardness of the matrix containing the copper-nickel alloy showed 214, and the hardness of the nickel-phosphorus alloy phase showed 630.

### Example 3

The backing plate 2 used was one which was provided with a 20 µm-thick nickel coating by electrolytic nickel plating on the entire surfaces including both surfaces of a ferritic stainless steel plate (SUS 430) similar to that of Example 1.

A mixed powder (37.8 mass% nickel, 2.2 mass% phosphorus, and 60 mass% copper) was prepared from 80% by mass of a copper-25 mass% nickel alloy powder and 20% by mass of a nickel-11 mass% phosphorus alloy powder.

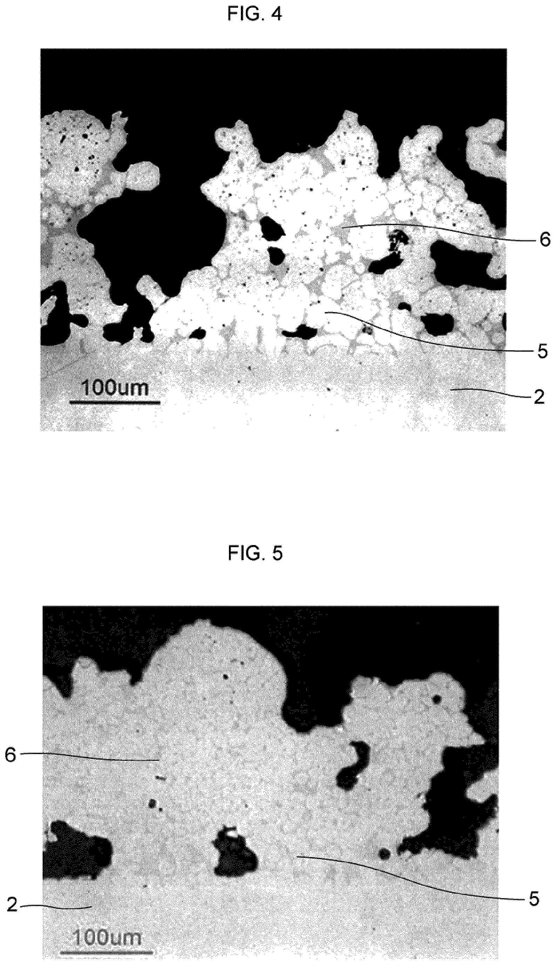

One surface of the nickel coating provided on one surface of the ferritic stainless steel plate (SUS 430) between the nickel coatings provided on the ferritic stainless steel plate (SUS 430) was degreased and cleaned by trichlene, and the prepared mixed powder was sprayed into a uniform thickness onto the one degreased and cleaned nickel coating to thereby fabricate a multilayered sliding member 1 having the backing plate 2 and the porous sintered alloy layer 3 in the same way as in Example 2. As is clear from Fig. 4, in the fabricated multilayered sliding member 1, the porous sintered alloy layer 3 which was integrally diffusion-bonded to the one surface of the nickel coating of the backing plate 2 showed a structure in which sintering due to the mutual diffusion of nickel and copper had progressed, and the nickel-phosphorus alloy phase 6 was dispersedly crystallized at grain boundaries of the matrix 5 containing a dense copper-nickel alloy. The hardness of the matrix 5 showed 222, and the hardness of the nickel-phosphorus alloy phase 6 showed 632.

### Example 4

A backing plate 2 similar to that of Example 3 was used.

A mixed powder (40 mass% nickel, 3.5 mass% phosphorus, and 56.5 mass% copper) was prepared from 43.5% by mass of a nickel-8 mass% phosphorus alloy powder and 56.5% by mass of a copper powder.

In the same way as in Example 3, a multilayered sliding member 1 having the backing plate 2 and the porous sintered alloy layer 3 was fabricated from this mixed powder. In the fabricated multilayered sliding member 1, the porous sintered alloy layer 3 which was integrally diffusion-bonded to the one surface of the nickel coating of the backing plate 2 showed a structure in which sintering due to the mutual diffusion of nickel and copper had progressed, and the nickel-phosphorus alloy phase was dispersedly crystallized at grain boundaries of the matrix containing a dense copper-nickel alloy. The hardness of the matrix showed 243, and the hardness of the nickel-phosphorus alloy phase showed 633.

### Example 5

A backing plate 2 similar to that of Example 3 was used excepting that a cold rolled steel plate (SPCC) was used in substitution of the ferritic stainless steel plate (SUS 430).

In the same way as in Example 1, a copper alloy powder (50 mass% nickel, 3 mass% phosphorus, and 47 mass% copper) was prepared from a 30% by mass of a copper powder, 50% by mass of a nickel powder, and 20% by mass of a copper-15 mass% phosphorus alloy powder.

In the same way as in Example 1, excepting that this copper alloy powder was sintered at a temperature of 895°C, a multilayered sliding member 1 having the backing plate 2 and the porous sintered alloy layer 3 was fabricated. As is clear from Fig. 5, in the fabricated multilayered sliding member 1, the porous sintered alloy layer 3 which was integrally diffusion-bonded to the one surface of the nickel coating of the backing plate 2 showed a structure in which sintering due to the mutual diffusion of nickel and copper had progressed, and the nickel-phosphorus alloy phase 6 was dispersedly crystallized at grain boundaries of the matrix 5 containing a dense copper-nickel alloy. The hardness of the matrix 5 showed 259, and the hardness of the nickel-phosphorus alloy phase 6 showed 636.

### Example 6

A backing plate 2 similar to that of Example 5 was used.

A mixed powder (57.6 mass% nickel, 2.4 mass% phosphorus, and 40 mass% copper) was prepared from 60% by mass of a nickel-4 mass% phosphorus alloy powder and 40% by mass of a copper powder.

In the same way as in Example 3, a multilayered sliding member 1 having the backing plate 2 and the porous sintered alloy layer 3 was fabricated from this mixed powder. The porous sintered alloy layer 3 in the fabricated multilayered sliding member 1 showed a structure in which sintering due to the mutual diffusion of nickel and copper had progressed, and the nickel-phosphorus alloy phase was dispersedly crystallized at grain boundaries of the matrix containing a dense copper-nickel alloy. The hardness of the matrix showed 262, and the hardness of the nickel-phosphorus alloy phase showed 639.

### Example 7

A backing plate 2 similar to that of Example 1 was used.

A mixed powder (35.6 mass% nickel, 4.4 mass% phosphorus, 6 mass% tin, and 54 mass% copper) was prepared from 40% by mass of a nickel-11 mass% phosphorus alloy powder, 6% by mass of tin powder, and 54% by mass of a copper powder.

In the same way as in Example 3, a multilayered sliding member 1 having the backing plate 2 and the porous sintered alloy layer 3 was fabricated from this mixed powder. In the fabricated multilayered sliding member 1, the porous sintered alloy layer 3 which was integrally diffusion-bonded to the one surface of backing plate 2 showed a structure in which sintering due to the mutual diffusion of nickel and copper had progressed, and the nickel-phosphorus alloy phase was dispersedly crystallized at grain boundaries of the matrix containing a dense copper-nickel alloy. Tin in the porous sintered alloy layer 3 was alloyed with copper in the matrix and formed a copper-tin alloy. The hardness of the matrix showed 237, and the hardness of the nickel-phosphorus alloy phase showed 633.

### Example 8

Fifteen mass percent of barium sulfate, 10% by mass of calcium pyrophosphate, 2% by mass of a polyimide resin, 0.5% by mass of graphite, and the balance a polytetrafluoroethylene resin were supplied into a Henschel mixer and were agitated and mixed, and 20 parts by weight of a petroleum-based solvent was compounded with 100 parts by weight of the resultant mixture. A synthetic resin obtained by mixing this admixture at a temperature (15°C) not more than the room-temperature transition point of the PTFE was supplied to and spread over one surface of the porous sintered alloy layer 3 of a multilayered sliding member 1 similar to that of Example 1 and was rolled by a roller to allow the synthetic resin to be filled and secured into the pores of, and onto the one surface of, the porous sintered alloy layer 3. Subsequently, after the semi-processed product thus treated was held for 5 minutes in a hot air drying furnace heated to a temperature of 200°C to remove the solvent, the dried synthetic resin was rolled under a pressure of 400 kgf/cm² by a roller to form a 0.05 mm-thick coating layer 4 in the pores of, and on the one surface of, the porous sintered alloy layer 3. This semi-finished product was heated and sintered in the heating furnace at 370°C for 10 minutes, and was subjected to pressurizing treatment by the roller again to make dimensional adjustment and correction of waviness and the like. A multilayered sliding member 1a was thereby obtained in which a 0.3 mm-thick porous sintered alloy layer 3 composed of 25% by mass of nickel, 3% by mass of phosphorus, and the balance copper was integrally diffusion-bonded to the one surface of backing plate 2, and which was provided with the coating layer 4 composed of 15% by mass of barium sulfate, 10% by mass of calcium pyrophosphate, 2% by mass of a polyimide resin, 0.5% by mass of graphite, and the balance a polytetrafluoroethylene resin in the pores of, and on the one surface of, the porous sintered alloy layer 3.

### Comparative Example 1

A mixed powder obtained by mixing 10 wt.% of an atomized tin powder passing through a 350-mesh sieve and 90% by mass of an electrolytic copper powder passing through a 150-mesh sieve for 20 minutes by a V-type mixer was sprayed into a uniform thickness onto the one surface of the backing plate 2 similar to that of Example 5. After this semi-finished product was sintered for 10 minutes at a temperature of 860°C in the heating furnace adjusted to a hydrogen gas atmosphere, thereby fabricating a multilayered sliding member 1 in which the porous sintered alloy layer 3 having a thickness of a 0.3 mm and composed of 10% by mass of tin and the balance copper was integrally diffusion-bonded to one surface of the backing plate 2.

### Comparative Example 2

A multilayered sliding member 1a was fabricated which had a 0.05 mm-thick coating layer 4 constituted of a synthetic resin similar to that of Comparative Example 8 and filled and secured in the pores of, and on the one surface of, the porous sintered alloy layer 3 of the multilayered sliding member 1 similar to that of Comparative Example 1.

A test was conducted on sulfidation corrosion resistance and friction and wear characteristics with respect to the multilayered sliding members 1 and 1a of the above-described Examples 1 to 8 and Comparative Examples 1 and 2.

### Test Method Concerning Sulfidation Corrosion Resistance

ENEOS Gear Oil GL-5 (tradename) manufactured by JXTG Nippon Oil & Energy Corporation was used as a gear oil with an excellent extreme pressure additive, metal corrosion inhibitor, detergent dispersant, and the like added to a base oil. This gear oil was accommodated in a container, the multilayered sliding members 1 and 1a of the above-described Examples 1 to 8 and Comparative Examples 1 and 2 were immersed for 500 hours in this gear oil held at a temperature of 150°C, and were removed every 100 hours to measure the mass change rate (%) of the porous sintered alloy layer 3 of each of the multilayered sliding members 1 and 1a.

### Test Conditions and Test Method concerning the Coefficient of Friction and the Amount of Wear

**Test Conditions:**

| | |
|---|---|
| Velocity: | 1.3 m/min |
| Load (bearing pressure): | 200 to 800 kgf/cm² |
| Test period: | 20 hrs. |
| Mating member: | Carbon steel for machine structural use (S45C) |
| Lubrication: | Oil (tradename: "Daphne Super Multi Oil #32" manufactured by Idemitsu Kosan Co., Ltd.) medium condition |

### Test Method:

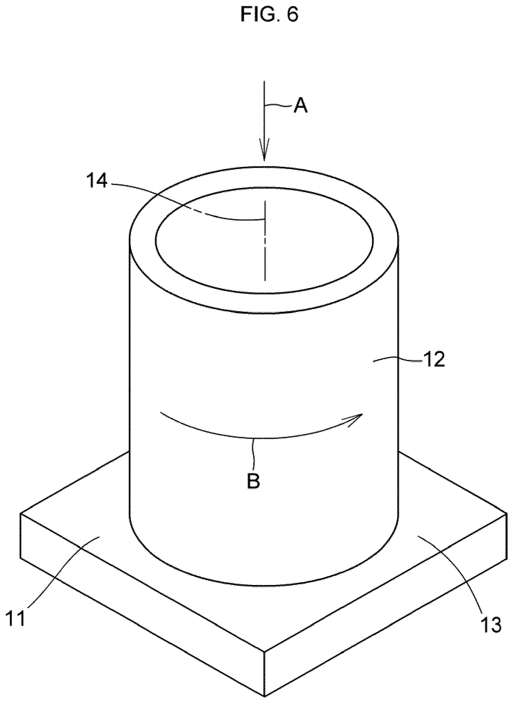

As shown in Fig. 6, a square plate-like bearing test piece 11 having a side length of 30 mm and fabricated from each of the multilayered sliding members 1 and 1a of Examples 1 to 8 and Comparative Examples 1 and 2 was fixed to a test stand. While a predetermined load was being applied from a cylindrical body 12 serving as a mating member to one surface 13 of the plate-like bearing test piece 11 in a direction A perpendicular to the one surface 13, the cylindrical body 12 was rotated in a direction B about an axis 14 of the cylindrical body 12, and measurement was made of the coefficient of friction between the plate-like bearing test piece 11 and the cylindrical body 12 and the amount of wear of the surface 13 after testing for 20 hours.

The test results are shown in Tables 1 to 3.

**[Table 1]**

| | | Examples | | | |
|---|---|---|---|---|---|
| | | 1 | 2 | 3 | 4 |
| Backing plate | | SUS 430 | SUS 430 | SUS 430 | SUS 430 |
| Presence or absence of nickel coating | | absent | absent | present | present |
| Components of porous sintered alloy layer: mass% | | | | | |
| Nickel (Ni) | | 25 | 30 | 37.8 | 40 |
| Phosphorus (P) | | 3 | 3 | 2.2 | 3.5 |
| Tin (Sn) | | - | - | - | - |
| Copper (Cu) | | 72 | 67 | 60 | 56.5 |
| Presence or absence of coating layer | | absent | absent | absent | absent |
| Hardness (MHV) of matrix | | 174 | 214 | 222 | 222 |
| Hardness (MHV) of nickel-phosphorus alloy phase | | 629 | 630 | 632 | 632 |
| Mass change rate (%) | 100 hrs. | 0.32 | 0.28 | 0.22 | 0.21 |
| | 200 hrs. | 0.38 | 0.28 | 0.31 | 0.22 |
| | 300 hrs. | 0.38 | 0.28 | 0.35 | 0.22 |
| | 400 hrs. | 0.41 | 0.28 | 0.35 | 0.23 |
| | 500 hrs. | 0.41 | 0.28 | 0.35 | 0.24 |
| Coefficient of friction (bearing pressure kgf/cm²) | Bearing pressure | | | | |
| | 200 | 0.10 - 0.12 | 0.09 - 0.12 | 0.09 - 0.10 | 0.09 - 0.12 |
| | 300 | 0.10 - 0.12 | 0.09 - 0.12 | 0.09 - 0.11 | 0.09 - 0.12 |
| | 400 | 0.11 - 0.13 | 0.10 - 0.12 | 0.09 - 0.12 | 0.09 - 0.10 |
| | 500 | 0.11 - 0.13 | 0.10 - 0.12 | 0.10 - 0.12 | 0.09 - 0.10 |
| | 600 | 0.12 - 0.14 | 0.12 - 0.14 | 0.10 - 0.12 | 0.09 - 0.10 |
| | 700 | 0.12 - 0.14 | 0.12 - 0.14 | 0.11 - 0.14 | 0.09 - 0.10 |
| | 800 | 0.12 - 0.14 | 0.12 - 0.14 | 0.11 - 0.14 | 0.09 - 0.11 |
| Amount of wear (mm) (bearing pressure kgf/cm²) | 200 | 0.005 | 0.005 | 0.005 | 0.008 |
| | 300 | 0.006 | 0.006 | 0.005 | 0.008 |
| | 400 | 0.006 | 0.008 | 0.007 | 0.010 |
| | 500 | 0.008 | 0.008 | 0.008 | 0.010 |
| | 600 | 0.009 | 0.010 | 0.010 | 0.015 |
| | 700 | 0.013 | 0.012 | 0.012 | 0.015 |
| | 800 | 0.013 | 0.013 | 0.012 | 0.017 |

**[Table 2]**

| | | Examples | | | |
|---|---|---|---|---|---|
| | | 5 | 6 | 7 | 8 |
| Backing plate | | SPCC | SPCC | SUS 430 | SUS 430 |
| Presence or absence of nickel coating | | present | present | absent | absent |
| Components of porous sintered alloy layer: mass% | | | | | |
| Nickel (Ni) | | 50 | 57.6 | 35.6 | 25 |
| Phosphorus (P) | | 3 | 2.4 | 4.4 | 3 |
| Tin (Sn) | | - | - | 6 | - |
| Copper (Cu) | | 47 | 40 | 54 | 72 |
| Presence or absence of coating layer | | absent | absent | absent | present |
| Hardness (MHV) of matrix | | 259 | 262 | 237 | 174 |
| Hardness (MHV) of nickel-phosphorus alloy phase | | 636 | 639 | 633 | 629 |
| Mass change rate (%) | 100 hrs. | 0.20 | 0.18 | 0.22 | 0.21 |
| | 200 hrs. | 0.20 | 0.18 | 0.28 | 0.22 |
| | 300 hrs. | 0.22 | 0.18 | 0.30 | 0.22 |
| | 400 hrs. | 0.22 | 0.19 | 0.30 | 0.23 |
| | 500 hrs. | 0.22 | 0.20 | 0.34 | 0.24 |
| Coefficient of friction (bearing pressure kgf/cm²) | Bearing pressure | | | | |
| | 200 | 0.08 - 0.10 | 0.07 - 0.09 | 0.08 - 0.10 | 0.02 - 0.04 |
| | 300 | 0.08 - 0.10 | 0.07 - 0.09 | 0.09 - 0.10 | 0.02 - 0.05 |
| | 400 | 0.09 - 0.11 | 0.08 - 0.10 | 0.09 - 0.11 | 0.02 - 0.06 |
| | 500 | 0.10 - 0.12 | 0.08 - 0.10 | 0.10 - 0.12 | 0.02 - 0.06 |
| | 600 | 0.10 - 0.12 | 0.08 - 0.10 | 0.10 - 0.12 | 0.03 - 0.08 |
| | 700 | 0.10 - 0.13 | 0.08 - 0.12 | 0.11 - 0.14 | 0.03 - 0.08 |
| | 800 | 0.10 - 0.13 | 0.08 - 0.12 | 0.11 - 0.14 | 0.04 - 0.09 |
| Amount of wear (mm) (bearing pressure kgf/cm²) | 200 | 0.003 | 0.002 | 0.003 | 0.012 |
| | 300 | 0.005 | 0.004 | 0.003 | 0.014 |
| | 400 | 0.009 | 0.004 | 0.006 | 0.016 |
| | 500 | 0.009 | 0.005 | 0.006 | 0.016 |
| | 600 | 0.010 | 0.006 | 0.008 | 0.018 |
| | 700 | 0.010 | 0.008 | 0.008 | 0.018 |
| | 800 | 0.010 | 0.009 | 0.010 | 0.024 |

**[Table 3]**

| | | Comparative Examples | |
|---|---|---|---|
| | | 1 | 2 |
| Backing plate | | SPCC | SPCC |
| Presence or absence of nickel coating | | present | present |
| Components of porous sintered alloy layer: mass% | | | |
| Nickel (Ni) | | - | - |
| Phosphorus (P) | | - | - |
| Tin (Sn) | | 10 | 10 |
| Copper (Cu) | | 90 | 90 |
| Presence or absence of coating layer | | absent | present |
| Hardness (MHV) of matrix | | - | - |
| Hardness (MHV) of nickel-phosphorus alloy phase | | - | - |
| Mass change rate (%) | 100 hrs. | 18 | |
| | 200 hrs. | 18 | |
| | 300 hrs. | 20 | |
| | 400 hrs. | 20 | |
| | 500 hrs. | 20 | |
| Coefficient of friction (bearing pressure kgf/cm²) | Bearing pressure | | |
| | 200 | 0.26 - 0.36 | 0.18 - 0.20 |
| Amount of wear (mm) (bearing pressure kgf/cm²) | 200 | 0.18 | 0.12 |

As for the multilayered sliding member 1 in Comparative Example 1, since the coefficient of friction showed 0.36 under the condition of the bearing pressure of 200 kgf/cm² in the test concerning the coefficient of friction and the amount of wear (thrust test), the test at higher bearing pressure conditions was suspended. In addition, in the multilayered sliding member 1a of Example 8, a defect such as exfoliation attributable to the sulfidation corrosion of the porous sintered alloy layer 3 was not observed in the coating layer 4. Meanwhile, as for the multilayered sliding member 1a of Comparative Example 2, it was observed that sulfides (CuS, etc.) due to sulfidation corrosion were generated in spots in the coating layer 4 on the one surface after immersion for 100 hours in the gear oil containing an extreme pressure additive, so that a further test was suspended.

From the test results shown in Tables 1 and 2, it can be appreciated that, in the test on sulfidation corrosion resistance due to immersion in the gear oil containing an extreme pressure additive, the multilayered sliding members 1 and 1a in accordance with the present invention make it possible to inhibit the progress of sulfidation corrosion, and exhibit excellent sliding characteristics and substantially improved load resistance even under a high bearing pressure condition of 800 kgf/cm².

### DESCRIPTION OF REFERENCE NUMERALS

- 1, 1a:: multilayered sliding member
- 2:: backing plate
- 3:: porous sintered alloy layer
- 4:: coating layer

## Claims

1. A multilayered sliding member comprising: a backing plate having a steel plate; and a porous sintered alloy layer which is integrally joined to one surface of said backing plate and is composed of 25 to 60% by mass of nickel, 2 to 7% by mass of phosphorus, and the balance copper.

2. A multilayered sliding member comprising: a backing plate having a steel plate; and a porous sintered alloy layer which is integrally joined to one surface of said backing plate and is composed of 25 to 60% by mass of nickel, 2 to 7% by mass of phosphorus, 3 to 8% by mass of tin, and the balance copper.

3. The multilayered sliding member according to claim 1 or 2, wherein the steel plate is formed of a ferritic, austenitic, or martensitic stainless steel plate, and the one surface of said backing plate is one surface of the stainless steel plate.

4. The multilayered sliding member according to claim 1 or 2, wherein the steel plate is formed of a ferritic, austenitic, or martensitic stainless steel plate, said backing plate further has a nickel coating covering one surface of the stainless steel plate, and the one surface of said backing plate is one surface of the nickel coating.

5. The multilayered sliding member according to claim 1 or 2, wherein the steel plate is formed of a rolled steel plate for general structure or a cold rolled steel plate, said backing plate further has a nickel coating covering one surface of the rolled steel plate for general structure or the cold rolled steel plate, and the one surface of said backing plate is one surface of the nickel coating.

6. The multilayered sliding member according to any one of claims 1 to 5, wherein said porous sintered alloy layer includes a matrix containing a copper-nickel alloy and a nickel-phosphorus alloy phase crystallized at grain boundaries of the matrix, and wherein the matrix has a micro Vickers hardness (HMV) of at least 170, and the nickel-phosphorus alloy phase has a micro Vickers hardness (HMV) of at least 600.

7. The multilayered sliding member according to any one of claims 1 to 6, further comprising a coating layer filled in the pores of, and secured on one surface of, said porous sintered alloy layer and containing a synthetic resin.

8. The multilayered sliding member according to claim 7, wherein the synthetic resin includes at least one synthetic resin selected from a fluororesin, a polyacetal resin, a polyamide resin, a polyphenylene sulfide resin, a polyetheretherketone resin, and a polyamideimide resin.
